# EUROPEAN PATENT APPLICATION

(11) **EP 1 369 599 A1**
(43) Date of publication of application: **10.12.2003**
(21) Application number: 03010724.7
(22) Date of filing: 14.05.2003
(51) Int. Cl.: F16B 5/01, F16B 37/06, F16B 37/12, F16B 13/14

(54) **An improved blind fastener**

(30) Priority: 28.05.2002 GB 0212190
(71) Applicant: Newfrey LLC, Newark, Delaware 19711 (US)
(72) Inventor: Jones, Stephen Victor, Great Barr, Birmingham B43 5LN (GB); Smith, Daniel Robin, Castle Bromwich, Birmingham B36 9DG (GB)
(74) Representative: Haar, Lucas H., Dipl.-Ing.

(57) **Abstract**

A method is described of securing a blind fastener (10) in a composite material (40, 42) comprises the steps of forming of hole (48) in an outer wall (40) of the composite material, subsequently inserting a liquid adhesive (50) through the hole (48) so as to fill a chamber (44') formed in the material behind the hole, then inserting a blind fastener (10) through the hole into the liquid adhesive until the head of the fastener (14) engages with the composite material wall (40), subsequently deforming the blind anchor (62) into engagement with an inner surface of the outer wall (40) to support the blind fastener (10) in the liquid adhesive while it sets and, in particular, for the liquid adhesive to engage with at least one channel (64) formed in the circumference of the fastener.

There is also provided a blind fastener for use in such method which comprises an elongate hollow body having an enlarged head (14) and a deformable weakened region (28), in which the body has, remote from the weakened region (28), at least one adhesive receiving channel (64) formed in the outer surface thereof.

## Description

The present invention relates to blind fasteners (or anchors) of the type that are inserted into preformed holes and then set or deformed into engagement with such holes for secure engagement. More particularly, the present invention is directed to a blind fastener for use in lightweight composite wall structures.

It is often desirable to provide fasteners or anchors for walls to enable appropriate fixings or mountings to be placed thereon. These fasteners may either be deformed so as to engage with the wall structure itself or, where the wall material is relatively thin, the fasteners are usually provided with an enlarged flange head for engagement with the outer portion of the wall whilst an inner portion of the anchor is deformed into engagement with the inner side of the wall so as to compress the wall between the deformed portion and the enlarged head. Such anchors are often referred to as blind anchors since the deformation and engagement occurs in an internal region of the wall which cannot be observed by the operator. One example of such a blind fastener is that sold by the Applicant under the Registered Trademark POPNUT®.

However, modern materials, particularly lightweight composite panels having a composite structure of a thin foil aluminium internal honeycomb structure sandwiched so as to extend transversely between two thin metal sheets, (normally aluminium), are designed to reduce weight whilst maintaining rigidity and strength. These materials have outer walls which are, by definition, relatively thin and usually, by themselves, lack sufficient rigidity or strength to withstand tensile or bending forces that are imposed on such thin sheet material by use of conventional fasteners, often resulting in local deformation of this thin wall and potential failure when a load is applied to and secured to a fastener mounted thereto in a conventional manner. It is the composite arrangement of such modern materials that provide the strength (ie. the honeycomb interior) as opposed to the strength of an individual sheet element.

In addition, where fasteners are attached to such composite structures, a hole needs to be preformed in an otherwise sealed unit, which provides a weakness for potential ingress of moisture, into such metal components which could interact with the internal support materials (ie. the honeycomb structure) of such panels and result in corrosion or other degradation in the integrity of the internal support material and thus again create an area of potential failure.

It is therefore an object of the present invention to provide a blind fastener and method of securing such a blind fastener which alleviates the aforementioned problems.

According to the present invention there is now provided a method of securing a blind fastener in a composite material, comprising the steps of forming a hole in an outer wall of this composite material, inserting a liquid adhesive through this said hole so as to fill a chamber formed in the material behind the hole, subsequently inserting the fastener through the hole and into the liquid adhesive until a head of the fastener engages with the wall, following which a weakened region of the blind anchor is deformed into engagement with this outer wall to support the blind anchor in the liquid adhesive in the chamber during setting thereof. In this manner, the blind fastener is engaged with the outer wall of the composite material in a conventional manner but the interior body has been surrounded by a mass of liquid adhesive which, when set, engages with and provides additional support for such fastener remote from the head and also provides a large surface area interaction between the set adhesive and the outer wall which distributes any load applied to the fastener over a much greater area.

Preferably, the blind fastener itself will be provided with at least one, and usually a series of, external channels, usually extending about the circumference of the fastener body, whereby when the fastener is inserted into the liquid adhesive these channels are able to receive the liquid adhesive which will provide additional support for the fastener, remote from the fastener head when the adhesive solidifies and sets. The adhesive bonds not only with the fastener body and, in particular, the channels formed in the fastener but also over a large interior surface area of the composite material and walls thereof. Thus, when such adhesive is set, the fastener is not simply engaged with the thin metal wall of such composite material but, through rigid engagement with the set adhesive is now bonded to the internal support structure of such composite material therefore allowing for a greater distribution of load.

Furthermore, the step of deforming the blind fastener into engagement with the outer wall effects compression of the adhesive between this deformed weakened region of the fastener and edges of the preformed hole to form a seal therebetween when the adhesive sets, thereby alleviating the potential for ingress of moisture into the composite material through such a preformed hole.

The step of deforming the blind fastener comprises the additional step of restraining the fastener head against the outer wall of the composite material and subsequently effecting relative displacement of an opposed end of the fastener towards the head end so as to deform a weakened region of the fastener, disposed between the two ends, into engagement with an inner surface of the outer wall to compress the outer wall therebetween. It is this deformation of the weakened region which will usually effects compression of the adhesive between the deformed anchor and the edges of the hole in the composite material.

Usually a force transmitting member will be engaged with the end of the blind fastener remote from the head and a force applied thereto is transmitted to this opposed end of the fastener body to effect the relative deformation of the fastener by drawing the remote end of the fastener towards the head of the fastener. Usually a force transmitting member has a force applied thereto by a conventional blind fastener setting tool.

This method has particular beneficial applications when the composite material comprises an internal honeycomb structure wherein the chamber will then comprise at least one of the internal honeycomb structures defined by the internal support material.

Preferably, sufficient liquid adhesive will be inserted into the chamber so as to completely encapsulate the fastener body which is inserted through the hole into such chamber, providing for much greater support about the entire fastener allowing for greater distribution of load.

Further according to the present invention there is also provided a blind fastener for setting in a composite material which comprises an elongate hollow tubular body for receiving an appropriate fixing element, the body having an enlarged head portion disposed at one end thereof and having an aperture through this head to communicate with the hollow interior of the fastener, the body further comprises a weakened region which is disposed between the head, and an end of the body remote from the head which weakened region being deformable so as to form a bulge (usually an enlarged ring) having a diameter greater than the diameter of the tubular body, wherein the tubular body, in a region remote from the weakened region, comprises at least one adhesive receiving channel formed in an outer surface thereof.

Preferably this weakened region is disposed adjacent to the head of the fastener.

Usually, this channel will be formed between at least two external ribs and preferably, there will be a series of external circumferential ribs extending around the outer surface of the fastener body to form a plurality of circumferential channels. Alternatively, an external screw thread could be employed to form at least one channel or, further, the channel could be formed by a plurality of external projections.

Preferably, the weakened region of the fastener will comprise a wall region having a reduced thickness in comparison to the main body wall thickness. This reduced thickness can either be achieved by maintaining a constant outer diameter along the entire length of the tubular rivet whereby the inner surface of the weakened region will have a greater diameter than the inner surface of the corresponding main body portion or, alternatively, the internal surface of the tubular rivet may have a substantially constant diameter along its inner surface whereby the weakened region of the body has a smaller external diameter than the main body portion.

It is usual that the blind fastener will further comprise an internal screw thread, remote from the weakened region, for co-operative screw threaded engagement with an appropriate screw threaded member inserted therein, which may serve as a fixing element or a force transmitting setting tool.

It is usual that the body of such a fastener will be sealed and, in particular, will have a closed end remote from the head.

Finally, according to the present invention there is also provided a composite material having a fastener secured thereto, the fastener comprising an enlarged head and a deformed region pressing an outer wall of the composite material therebetween wherein the composite material will comprise at least one internal chamber filled with an adhesive material, this adhesive material engaging with at least one channel formed in an outer surface of the fastener inserted therein to provide additional support for the said fastener remote from the head.

A preferred embodiment of the present invention will now be described, by way of example only, with reference to the accompanying illustrative drawings in which:
- Figure 1: shows a side elevation of a blind fastener according to the present invention;
- Figure 2: shows part sectional view of a composite material panel having the fastener of Figure 1 set in engagement therewith; and
- Figure 3: is a side elevation of an alternative blind fastener according to the present invention; and
- Figure 4: shows a part sectional view of a composite material panel having the fastener of Figure 3 set in engagement therewith.

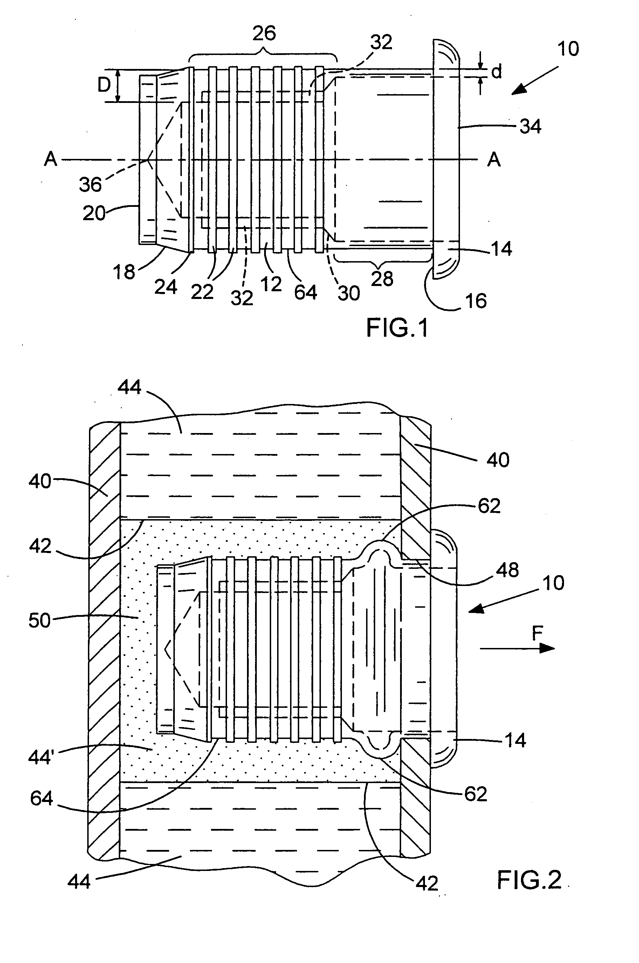

Referring now to Figure 1, a blind fastener (10) is shown in side elevation but having its internal configuration shown illustratively by dotted lines. This anchor (10) comprises a substantially rigid cylindrical metal tube (12) being symmetrical about its longitudinal axis (A) and having a substantially uniform external diameter. The fastener (10) further comprises, at one remote end thereof, an enlarged head (14) provided by a flange extending radially outwardly of the metal tube (12). This head (14) then provides a shoulder (16) in abutment with the outer surface of the tube (12).

The opposed remote end (20) of the fastener (10) comprises an inwardly tapering portion (18) whereby the external diameter of the tube decreases towards an end portion (20) having a second, reduced external diameter.

Furthermore, the fastener (10) is provided with an array of circumferential ribs (22) integrally formed on the tube, defining a plurality of circumferential channels (64) therebetween, each of which ribs has a diameter slightly greater than the diameter of the metal tube (12). The end rib (24), closest to the remote end (20) engages with the inwardly tapering surface (18) to provide a substantially circumferential inclined lead-in face (26) towards the end of the fastener (10) remote from the head (14) which assist in aligning the fastener when being inserted through a hole.

It will be appreciated that the ribs (22) effectively define the outer surface of the fastener (by virtue of having the greatest diameter).

Whilst the current embodiment effectively shows the tubular body having an array of ribs (22) to define a complimentary array of channels (64) formed about the fastener body, it will be appreciated that such channels (64) could simply be formed directly into the uniform exterior surface (12) of such a tubular body. In this manner, the external diameter of the tubular body would be maintained substantially constant along its entire length until it engages with the tapering end portion (18).

However, for the embodiment of Figure 1, any hole formed in a workpiece (40) for receipt of such a fastener (10) will need to have a minimum diameter equivalent to the diameter of such ribs (22), but must be less than the diameter of the enlarged head (14) to allow the shoulder (16) to engage with that workpiece.

Internally, the fastener (10) is substantially hollow having a primary wall thickness (D) (which is the difference between the internal thread major diameter and the outer surface of the tube (12)) at a main body portion (26), which is surrounded by the ribs (22). An outer body portion (28) disposed between the main body portion (26) and the head (14) comprises a second, thinner, this outer body portion (28) having a wall thickness (d). The internal surface of the hollow tube (12) is provided with an annular inclined face (30) such that the wall thickness gradually increases in a thickness along this face (30) between the outer body portion (28) and the main body (26) to present an internal inclined shoulder, which serves as a lead in face to align any fixing elements inserted therein.

The main body portion (26), apart from having a greater wall thickness (D) is also provided with an internal screw thread (32) as schematically illustrated in Figure 1. This screw thread (32) is of conventional design for co-operating screw threaded engagement with a screw threaded member to be inserted through an aperture (34) in the flange head, communicating with the interior of the fastener (10).

The remote end (20) of the fastener (10) is substantially solid whereby the hollow interior of the fastener tapers towards an interior apex (36) so as to be able to accommodate the tapered end of a screw threaded member inserted therein. As will be described later, it is preferable to provide a sealed body portion of such fasteners to prevent ingress of adhesive in its preferred application.

Referring now to Figure 2, modern composite materials which are both lightweight and maintain relatively high strengths and rigidity, are often employed in both the building and manufacturing industries whereby the advantages of lightweight materials are considerable. Generally such composite materials will comprise an outer skin comprising two relatively thin metallic sheets (40) (in particular the embodiment described herein has aluminium sheets having a thickness of between 1mm and 5mm which then have a thin foil aluminium honeycomb cross support structure (42) providing lateral walls extending between the two opposed sheets (40) in a preferred manner. The aluminium honeycomb walls form a series of individual pockets (44) (three of which are illustrated in Figure 2) between the walls. Such pockets may simply be air filled or may additionally comprise a lightweight insulating material such as a foam or aerated plastics. This lightweight insulating material also provides additional strength. It is also understood that the aluminium honeycomb could, alternatively, be replaced by a foam or aerated inner material to provide sufficient rigidity between the two opposed outer walls (40) for certain applications.

Whilst such lightweight materials provide good strength to weight performance, a difficulty is encountered when a fixing is to be mounted on walls of such material. Conventional wall fasteners either deform to engage with the side walls of a hole formed through the material in which they are mounted (as in the example of wall plugs) or where blind fasteners are used, a fastener is inserted through the wall surface and subsequently deformed so that an innerwardly positioned part of the anchor is deformed to engage with the rear surface of the wall to clamp the wall between the deformed portion and a head remaining on the exterior side of the wall.

However, for the above described composite materials, the wall (40) is of insufficient thickness to co-operate and engage with a fastener that is expanded therein, whilst the lightweight thin wall (40) have insufficient rigidity to withstand tensile or bending forces that are imposed when a weight or force is applied to the fastener (ie. when an article may be affixed and hung on such a fastener). Such fasteners can in fact "tear" such thin material.

The current invention therefore addresses this particular problem by providing additional local structural rigidity to such composite materials by injecting a liquid adhesive material, usually a two-part system comprising a hardener and an accelerator, into a chamber (44) formed between the opposed walls (40) and which is accommodated within the various honeycomb chambers (44) formed therein.

As best seen in Figure 2, the system operates by firstly drilling a hole (48) in one of the walls (40). The hole (48) will have a diameter substantially corresponding to the maximum diameter of the ribs (22) such that the fastener (10) can be inserted therethrough. Once the hole (48) has been formed, access is now provided to an interior chamber (44) into which the adhesive material (50) can then be injected. Examples of such preferred two part adhesive systems include epoxy, polyester or acrylic resin based adhesives. In particular, in the current embodiment it is preferred to use a two part epoxy acrylate resin injection system.

Once this two part liquid adhesive has been mixed it is injected through the hole (48) and is sufficiently viscous to remain within the chamber (44) defined by the honeycomb structure (42). In the event that the pre-drilled hole (48) were to actually breach one of the support walls (42) of the honeycomb structure, then sufficient adhesive would be required to be injected to occupy all those chambers accessed by the hole (48).

Once this adhesive has been inserted into the chamber (42) the fastener (10) can then be inserted through hole (48) so as to engage and be substantially encapsulated by the adhesive (50).

Fasteners of this type are defined as blind fasteners since it is required to deform an internally inserted portion of the fastener body so as to compress the wall (40) between this deformed portion and the fastener head. In this particular embodiment, a bolt member (not shown) is inserted in screw threaded engagement with an internal screw thread (32) of the fastener (10) in a conventional manner. The fastener is then inserted through the hole (48) until the shoulder (16) of the head (14) abuts with the exterior surface of the wall (40) (as shown). A specialised setting tool is then used to set such fastener. Basically, such blind fastener setting tools are conventional, comprising an outer nose to engage with the outer periphery of the head (14) to retain that head from displacement towards the tool whilst the screw threaded member (not shown) passes through an aperture in this nose of the setting tool and is clamped by a set of jaws which are displaceable longitudinally relative to the nose of the setting tool. In this manner, the nose of the tool retains the head (14) in engagement with the wall (40) whereby the screw threaded member will then be clamped by the jaws and moved in a direction left to right as viewed in Figure 2, relative to the head (14). In this manner, it will be appreciated that the narrower wall portion (28) of the fastener (10) provides a weakened portion which collapses on setting when sufficient setting force is transferred, by displacement of the inserted screw threaded member and the main body portion (26). In this manner, the wall (28) collapses and hence expands (as shown) so as to form a bulge (or enlarged circumferential ring) (62) which engages with the interior surface of the wall (40) in the manner shown in Figure 2, thereby compressing the wall (40) between the flange shoulder (16) and this deformed portion or bulge (62), securely holding the wall anchor in engagement with the wall (40). This is a conventional setting operation employed in blind fasteners.

The series of radial channels (64) are then completely engaged by the adhesive material (50) to form a strong bond therewith when the adhesive sets whilst, secondly, the adhesive material compressed between the deformed portion (62) and the wall (40) forms a substantially watertight and airtight seal therebetween which alleviates ingress of moisture. In this manner, once the adhesive (50) sets and becomes rigid, it serves to provide additional support and structural rigidity to the fastener (10) along the entire longitudinal length of the fastener (10) inserted therein. Thus any load applied to the fastener (10) is more evenly distributed not only across a larger surface area of the wall (40) (as bonded to by the adhesive) of the wall (40), but also onto the honeycomb structure (42) by virtue of the bonding therewith by the solidified adhesive (50).

As can be appreciated from Figure 2, if a pull-out force (F) is applied to a fixing element subsequently inserted in the fastener (10) then where previously such force would simply be transmitted directly to the interface between the deformed region (62) and the thin wall (40), here the entire set adhesive material forms a much greater cross sectional area which engages with the wall (40) and thus more evenly distributes force. In addition, since the adhesive would have bonded with the side walls of the honeycomb chamber (42) then the pull-out force is effectively transmitted to the entire interconnected honeycomb structure (42) and thus the force is subsequently distributed over a much greater surface area than the single chamber (44) shown in Figure 2. This distribution of force significantly alleviates the potential rupture or failure of the thin wall material (40) in the region of the set fastener (10). Additionally, since the fastener (10) is now supported along its entire length, any downward force (when viewed in Figure 2) applied to an element secured in the fastener (10) is again more evenly distributed over a much larger surface area and not simply the lower interface between fastener (10) and the wall (40) that bears the entire load. Again such force is distributed over a much greater area of the wall (40) and also across the honeycomb structure (42).

It will also be appreciated the deformation of the fastener (10) during the setting operation causes displacement of the channels (64) from left to right as viewed in Figure 2. This serves to assist in compressing and moving the flowable liquid adhesive about these channels (64) to ensure it serves to squeeze the adhesive into the channels to create a good bond therebetween.

In addition, whilst the preferred embodiment has been described with reference to insertion into a composite material having an internal honeycomb structure, the invention is equally applicable to other lightweight composite materials having thin walls (40). For example, such a composite material could replace the honeycomb structure with an internal foam or aerated structure to provide sufficient rigidity between the two opposed walls (40). In this embodiment, whilst a pre-defined chamber equating to one of the hexagonal honeycomb chambers formed in Figure 2 is not created, the term "chamber" is taken to include an area around the fastener (10) into which an adhesive material is able to flow and bond with. Therefore, once a hole has been formed through the wall (40) of such a foam structure, the adhesive can then be injected into this hole so as to flow freely within the foam material about this preformed hole such that the foam material is substantially saturated with the adhesive, with the adhesive forming a liquid fill within the hole itself. In this manner when the fastener (10) is inserted into the hole it will effectively compress the adhesive around the fastener (10) into engagement with the channels (64) and also into the surrounded foam or aerated material. Again the setting of the fastener (10) so as to compress the wall (40) between the deformed region (62) and head (14) will support the unloaded fastener in its preferred position while the adhesive then sets, whereby the setting of the adhesive within the aerated or foam structure again provides a solidified rigid adhesive material integrated with the foam material over a large area and in particular in a large supportive area surrounding the hole (48) and also bonding the fastener (10) with the foam material over a large area to distribute any force applied to the fastener. As such, the chamber may be of defined size when considered in conjunction with the honeycomb composite material or may be of indefinite shape and size when considered in conjunction with a foam or aerated material. It is simply intended to convey the interpretation such that the adhesive is able to flow around the preformed hole (48) so as to encapsulate a fastener inserted therein and to bond with a large area of the composite material.

A further advantage of this invention is that the engagement of the wall (40) between the flange (16) and the deformed region (62) is sufficient to hold the fastener in the desired orientation whilst the adhesive sets. Once the adhesive has been set, the screw threaded member can be removed and reapplied as required. Alternatively a different fixing element can be used to replace the screw threaded member (which may have been a specific tool used for setting such fasteners).

The foregoing description describes a first preferred embodiment of the current invention and it will be appreciated that there are many modifications to this particular embodiment which still fall within the scope of the current invention. For example, this preferred embodiment discusses the use of circumferential ribs (22) extended about the circumference of the anchor (10) to form appropriate channels (64) for engagement with the adhesive in a set position. However, whilst these ribs are normally circumferential and are displaced approximately 1mm from one another, they could alternatively be formed as a continuous external screw thread or alternatively the outer surface could in fact be knurled. Whilst the preferred ribs are rectangular forming rectangular grooves, such grooves could alternatively be formed by ribs having rounded crests and could be of acme construction. However, it is important that such ribs are confined to the main body portion (26) so as not to effect or strengthen the weakened portion (28) which is required to deform when appropriate load is applied.

In addition, whilst this preferred embodiment utilises a thinner wall portion (28) formed by enlarging the internal opening passing therethrough, it is equally envisaged that this thinner wall portion could alternatively be formed by having a reduced external diameter. The main objective of the thinner wall (28) is that it will collapse when sufficient load is applied to the main body portion (26) in the manner described.

Furthermore, whilst the preferred setting method utilises engagement of a screw threaded member with the corresponding internal screw threaded arrangement of the fastener (10), an alternative setting mandrel arrangement could equally be employed. Here, instead of a screw threaded engagement between an elongate member and the fastener for setting purposes, a rigid mandrel having a breakneck (normally a narrowed region which will fail at a pre-determined load) could be engaged or integrally formed with the rear wall (20) of such a fastener (10). Here, when a similar setting tool engages the mandrel, a force will be applied along the length of the mandrel (in the manner previously described) to the end wall (20) to effect similar deformation of the weakened region (28). Once such deformation has occurred, continued loading applied to the mandrel will then cause the mandrel to fail at its pre-determined breakpoint leaving the fastener in a set position. Again here, the purpose of the mandrel is to apply a force from left to right as viewed in Figure 2 so as to compress and deform the weakened region (28) between the main body portion (26) of the anchor and the head (14). In either case, it will be preferred to have an internal screw thread about the interior surface of the fastener (10) to allow co-operating screw threaded engagement with the appropriate fastening element. However, frictional engagement between a fastening element and the fastener (10) could also be employed.

Whilst the preferred embodiment is directed towards a blind fastener element to allow a fixing element to be inserted therein, such blind fasteners could alternatively be used to directly clamp a second workpiece onto the wall (40) of the composite material, with this additional workpiece being disposed between the wall (40) and the shoulder (16). In such a case, the weakened region (62) may be disposed remote from the head so as to lie between the main body portion (26) and a secondary body portion having the thickness (D) adjacent to the head such that the deforming region is of a sufficient distance to compensate for the insertion of a secondary workpiece. Alternatively, the weakened region (28) as shown in Figure 1 could simply be increased in length to compensate for the inclusion of a workpiece. It will be appreciated that the deformed region (62) can only occur inwardly of the wall (40) since the diameter of the hole (48) itself restrains deformation of the weakened region which passes through that hole.

Whilst the channels (64) are shown to extend about the entire circumference of the fastener (10), such channels could be intermittent or could in fact comprise a series of individual holes extending partway through the body. Their objective is simply to provide a recess into which the adhesive material can flow to form a better engagement when set.

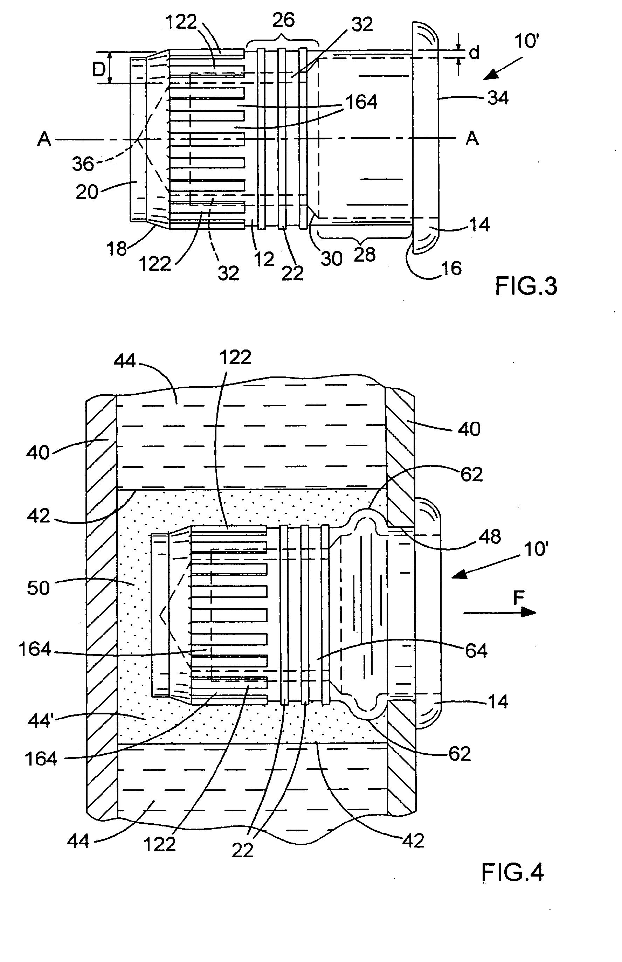

A second embodiment of the present invention is shown in Figures 3 and 4 illustrating a second blind fastener (10') which has its basic structure substantially identical to the blind fastener (10) shown in Figures 1 and 2 and as such, like parts of the fastener (10') are identified with the same reference numerals as those parts identified with respect to blind fastener (10) of Figures 1 and 2.

The modified blind fastener (10') of Figures 3 and 4 is provided with a further array of additional ribs (122) disposed about the external diameter of the metal tube (12), and which are longitudinally extending and disposed between the remote end (20) of the fastener (10') and an array of circumferential projections (22). These longitudinal or axial extending ribs (122) again form therebetween a series of channels (164) which extend axially on the outer surface of the tube (12) so as to be substantially perpendicular to the circumferential channels (64) formed thereon as described with reference to blind fastener (10).

Engagement of the adhesive (50) with the channels (64), once set, serves to restrain axial displacement of the blind fastener (10') out of the hole (48) whereby the engagement between the adhesive (50) and the axially extending channels (164) further serves to restrain rotational displacement of the anchor within the composite material when set. Thus, when a screw threaded engaging member is inserted into the set fastener (10') any excess torque between the screw threaded member and the fastener (10') is distributed directly into the set adhesive and thus exerted over a much larger surface area. This helps alleviate the possibility of rotational slip of the set fastener (10').

## Claims

1. A method of securing a blind fastener in a composite material, comprising the steps of:
forming a hole in an outer wall of said composite material,
inserting a liquid adhesive through said hole so as to fill a chamber formed in said material behind said hole,
inserting said fastener through said hole and into said liquid adhesive until a head of said fastener engages said wall,
eforming a weakened region of said blind fastener into engagement with an inner surface of said outer wall to support said blind fastener in said liquid adhesive during setting thereof.

2. A method as claimed in claim 1 further comprising the steps of:
providing said blind fastener with at least one external channel,
inserting said fastener through said hole and into said liquid adhesive for said channel to receive said liquid adhesive to provide additional support for said fastener, remote from said head, when said adhesive is set.

3. A method as claimed in claim 1 or claim 2 including the step of deforming said blind fastener into engagement with said outer wall to effect compression of said adhesive between said deformed weakened region of said fastener and edges of said hole to form a seal therebetween when said adhesive sets.

4. A method as claimed in any one of the preceding claims wherein deforming said blind fastener comprises the step of restraining said fastener head against said outer wall of said composite material and effecting relative displacement on an opposed end of said fastener towards the head end so as to deform a weakened region of said fastener into engagement with an inner surface of said outer wall to compress said wall therebetween.

5. A method as claimed in claim 4 when appended to claim 3 wherein deformation of said weakened region into engagement with said inner surface of said wall effects said compression of said adhesive between said deformed anchor and edges of said hole.

6. A method as claimed in claim 4 or claim 5 when appended to claim 4 wherein a force transmitting member is engaged with said opposed end of said blind fastener and a force is applied thereto to effect relative deformation of said fastener.

7. A method as claimed in claim 5 wherein force is applied to said force transmitting member by a blind fastener setting tool.

8. A method as claimed in any one of the preceding claims for securing a blind fastener in a composite material having an internal honeycomb structure, wherein said chamber comprises at least one of said honeycombs.

9. The method as claimed in any one of the preceding claims wherein sufficient liquid adhesive is inserted into the chamber so as to completely encapsulate a fastener body inserted therein.

10. A blind fastener for setting in a composite material, comprising an elongate hollow tubular body for receiving an appropriate fixing element, an enlarged head portion disposed at one end of said boy and having an aperture therethrough to communicate with the interior of the fastener, a weakened region of said body disposed between said head and an end of said body remote from said head, said weakened region being deformable so as to form a bulge having a diameter greater than the diameter of the tubular body; wherein said tubular body, remote from said weakened region, comprises at least one adhesive receiving channel formed in an outer surface thereof.

11. A blind fastener as claimed in claim 7 wherein said at least one channel is formed between at least two external ribs on said fastener.

12. A blind fastener as claimed in claim 7 or claim 8 having an external screw thread forming said at least one channel.

13. A blind fastener as claimed in any one of claims 7 to 9 wherein said weakened region comprises a wall portion having a reduced thickness.

14. A blind fastener as claimed in any one of the preceding claims wherein said fastener has an internal screw thread, remote from said weakened region, for screw threaded engagement with an appropriate screw threaded member inserted therein.

15. A composite material having a fastener secured thereto, said fastener comprising an enlarged head and a deformed region compressing an outer wall of said composite material therebetween, wherein said material comprises at least one internal chamber filled with an adhesive material, said adhesive material engaging with at least one channel formed in the outer surface of said fastener inserted therein to provide additional support for said fastener remote from said head.

16. A method of securing a blind fastener substantially as herein described with reference to the accompanying drawings.

17. A blind fastener substantially as herein described with reference to the accompanying drawings.

18. A composite material having a blind fastener secured substantially thereto as herein described with reference to the accompanying drawings.
